# EUROPÄISCHE PATENTSCHRIFT

(11) **EP 0 746 575 B1**
(45) Veröffentlichungstag und Bekanntmachung des Hinweises auf die Patenterteilung: **22.10.1997**
(21) Anmeldenummer: 95911239.2
(22) Anmeldetag: 17.02.1995
(51) Int. Cl.: C08F 218/04, C08F 220/04, C11D 3/37

(54) **VERFAHREN ZUR HERSTELLUNG VON COPOLYMERISATEN AUS VINYLESTERN UND MONOETHYLENISCH UNGESÄTTIGTEN CARBONSÄUREN UND IHRE VERWENDUNG**
PROCESS FOR PREPARING COPOLYMERS FROM VINYL ESTERS AND MONOETHYLENICALLY UNSATURATED CARBOXYLIC ACIDS AND USE THEREOF
PROCEDE DE PRODUCTION DE COPOLYMERES A PARTIR D'ESTERS DE VINYLE ET D'ACIDES CARBOXYLIQUES MONOETHYLENIQUEMENT INSATURES, ET LEUR UTILISATION

(30) Priorität: 22.02.1994 DE 4405621
(43) Veröffentlichungstag der Anmeldung: 11.12.1996
(73) Patentinhaber: BASF AKTIENGESELLSCHAFT, 67056 Ludwigshafen (DE)
(72) Erfinder: BOECKH, Dieter, D-67117 Limburgerhof (DE); KISTENMACHER, Axel, D-67061 Ludwigshafen (DE); DENZINGER, Walter, D-67346 Speyer (DE); RAU, Iris, D-67227 Frankenthal (DE); FUNHOFF, Angelika, D-69198 Schriesheim (DE); BAUR, Richard, D-67112 Mutterstadt (DE); KUD, Alexander, D-55234 Eppelsheim (DE); SCHWENDEMANN, Volker, D-67434 Neustadt (DE)
(86) Internationale Anmeldenummer: EP9500575
(87) Internationale Veröffentlichungsnummer: WO9522569

(56) Entgegenhaltungen:
- EP-A- 0 497 611
- GB-A- 923 850

## Beschreibung

Die Erfindung betrifft die Herstellung von Copolymerisaten aus Vinylestern und monoethylenisch ungesättigten Carbonsäuren durch radikalische Copolymerisation in wäßrigem Medium in Gegenwart von Initiatoren und gegebenenfalls Reglern und die Verwendung der Copolymerisate als Zusatz zu Wasch- und Reinigungsmitteln.

Aus der US-A-3 268 491 ist ein Verfahren zur Herstellung von Copolymerisaten aus Vinylacetat und monoethylenisch ungesättigten Dicarbonsäuren durch Copolymerisieren der Monomeren in wäßrigem Medium bei pH-Werten von 3 bis 6 in Gegenwart von Redoxkatalysatoren bekannt. Als oxydierende Komponente des Redoxsystems werden vorzugsweise Persulfate eingesetzt, während als reduzierende Komponente Sulfite oder Thiosulfate verwendet werden. Die oxydierende Komponente wird dabei immer im molaren Überschuß gegenüber der reduzierenden Komponente angewandt. Man erhält alternierende Copolymerisate.

Aus der EP-A-0 441 022 sind Copolymerisate aus monoethylenisch ungesättigten Dicarbonsäuren und monoethylenisch ungesättigten Monocarbonsäuren bekannt, die durch Copolymerisieren von 3 bis 25 Gew.-% mindestens einer monoethylenisch ungesättigten Dicarbonsäure und 75 bis 97 Gew.-% mindestens einer monoethylenisch ungesättigten Monocarbonsäure und gegebenenfalls carboxylgruppenfreien ethylenisch ungesättigten Monomeren in Gegenwart von wasserlöslichen Polymerisationsinitiatoren, Kupfersalzen als Pclymerisationsmoderator und einer Base hergestellt werden. Als carboxylgruppenfreies ethylenisch ungesättigtes Monomer ist auch Vinylacetat genannt, jedoch nicht mit Beispielen belegt. Unter den beschriebenen Polymerisationsbedingungen beobachtet man aber eine starke Zersetzung des Vinylacetats bzw. die Bildung von Homopolymerisaten des Vinylacetats.

In der US-A-3 887 480 wird die Herstellung von Terpolymerisaten aus 35 bis 70 Mol-% Maleinsäure, 20 bis 45 Mol-% Vinylacetat und 2 bis 40 Mol-% Acrylsäure in wäßrigem Medium in Gegenwart von 18 bis 40 Gew.-% Persulfat und von Bisulfit beschrieben, wobei Persulfat gegenüber Bisulfit im molaren Überschuß eingesetzt wird.

Aus der GB-A-923 850 ist bekannt, Latices mit einem Polymergehalt von 30 bis 55 Gew.-% durch Polymerisieren von Vinylacetat mit 0,5 bis 3,0 Gew.-%, bezogen auf die Monomermischung, in Gegenwart von Redoxkatalysatoren und Netzmitteln in wäßriger Emulsion bei Temperaturen unterhalb von 50°C herzustellen.

Bei den oben beschriebenen Verfahren werden die ethylenisch ungesättigten Carbonsäuren zumindest teilweise neutralisiert, weil sonst eine zu starke Zersetzung des Vinylacetats während der Polymerisation eintreten würde.

Der Erfindung liegt die Aufgabe zugrunde, ein Verfahren zur Herstellung von Copolymerisaten von Vinylestern gesättigter Carbonsäuren mit mindestens 2 C-Atomen zur Verfügung zu stellen, bei dem die Zersetzung der Vinylester während der Polymerisation nicht so gravierend ist wie bei den bekannten Verfahren.

Die Aufgabe wird erfindungsgemäß gelöst mit einem Verfahren zur Herstellung von Copolymerisaten aus Vinylestern und monoethylenisch ungesättigten Carbonsäuren durch radikalische Copolymerisation in wäßrigem Medium in Gegenwart von Initiatoren und gegebenenfalls Reglern, wenn man
(a) 20 bis 80 Mol-% Vinylester von aliphatischen Monocarbonsäuren mit mindestens 2 C-Atomen,
(b) 80 bis 20 Mol-% monoethylenisch ungesättigte Carbonsäuren und gegebenenfalls
(c) 0 bis 30 Mol-% andere copolymerisierbare monoethylenisch ungesättigte Monomere und/oder
(d) 0 bis 10 Mol-% Monomere, die mindestens zwei ethylenisch ungesättigte, nicht konjugierte Doppelbindungen im Molekül
enthalten,
in Gegenwart mindestens einer reduzierend wirkenden Schwefel-, Phosphor- und/oder Stickstoffverbindung und von 0,05 bis 30 Gew.-%, bezogen auf die Monomeren, mindestens eines oberflächenaktiven Mittels copolymerisiert.

Gegenüber den bekannten Verfahren zur Herstellung von Copolymerisaten von Vinylestern liegt der Vorteil des erfindungsgemäßen Verfahrens darin, daß die Zersetzung der Vinylester während der Copolymerisation sehr stark zurückgedrängt ist, daß die gebildeten Copolymerisate dispergiert oder in Lösung gehalten werden und daß die Vinylester entsprechend ihrem Anteil in der Monomermischung in das entstehende Copolymerisat eingebaut werden.

Geeignete Vinylester leiten sich von gesättigten Carbonsäuren mit mindestens zwei C-Atomen ab, z. B. Vinylacetat, Vinylpropionat, Vinylbutyrat, Vinylisobutyrat, Vinylpalmitat, Vinylstearat und Vinyllaurat. Den Vinylestern können somit beispielsweise gesättigte Carbonsäuren mit 2 bis 18 C-Atomen zugrundeliegen. Bei der Copolymerisation kann man einen einzigen oder eine Mischung aus mindestens zwei verschiedenen Vinylestern einsetzen, z.B. Mischungen aus Vinylacetat und Vinylpropionat oder Mischungen aus Vinylacetat und Vinylbutyrat. Bei der Copolymerisation bevorzugt eingesetzte Vinylester sind Vinylacetat und Vinylpropionat. Die Vinylester sind in den bei der Copolymerisation eingesetzten Monomermischungen in Mengen von 20 bis 80, vorzugsweise 25 bis 65 Mol-% enthalten.

Die Copolymerisate enthalten als Komponente (b) monoethylenisch ungesättigte Carbonsäuren einpolymerisiert. Die Monomeren (b) leiten sich beispielsweise von monoethylenisch ungesättigten Carbonsäuren mit 3 bis 8, vorzugsweise 3 bis 5 Kohlenstoffatomen ab. Geeignete Monomere der Komponente (b) sind beispielsweise Acrylsäure, Methacrylsäure, Vinylessigsäure, Crotonsäure, Maleinsäure, Fumarsäure, Itaconsäure und Citraconsäure. Vorzugsweise setzt man aus dieser Gruppe von Monomeren Acrylsäure oder Mischungen aus Acrylsäure und Maleinsäure bei der Copolymerisation ein. Solche Mischungen enthalten vorzugsweise 20 bis 60 Mol-% Acrylsäure und 10 bis 55 Mol-% Maleinsäure. Die Monomeren der Gruppe (b) können in Mengen von 20 bis 80, vorzugsweise 25 bis 75 Mol-% in der Monomermischung enthalten sein. Die Dicarbonsäuren können bei der Copolymerisation gegebenenfalls auch als Anhydrid, sofern sie Anhydride bilden, oder als Halbester mit C1- bis C4-Alkoholen eingesetzt werden.

Die Monomermischungen können gegebenenfalls (c) andere copolymerisierbare monoethylenisch ungesättigte Monomere enthalten, z.B. Acrylamid, Methacrylamid, 2-Acrylamido-2-methylpropansulfonsäure, Vinylsulfonsäure, Allylsulfonsäure, Methallylsulfonsäure, Vinylphosphonsäure, Allylphosphonsäure, Acrylnitril, Methacrylnitril, Dimethylaminoethylacrylat, Diethylaminoethylacrylat, Diethylaminoethylmethacrylat, N-Vinylpyrrolidon, N-Vinylformamid, N-Vinylimidazol, N-Vinylimidazolin, 1-vinyl-2-methyl-imidazol, 1-vinyl-2-methyl-imidazolin und Hydroxyalkylester mit 2 bis 6 C-Atomen in der Hydroxyalkylgruppe von monoethylenisch ungesättigten 3 bis 6 C-Atome enthaltenden Carbonsäuren wie Hydroxyethylacrylat, Hydroxyethylmethacrylat, Hydroxy-n-propylacrylat, Hydroxy-isopropylacrylat, Hydroxy-isobutylacrylat, Hydroxyethylmonomaleinat, Butandiol-1,4-monoacrylat und Hydroxy-n-butyldimaleinat. Die Monomeren der Gruppe (c) werden bei der Copolymerisation in Mengen von 0 bis 30 Mol-% eingesetzt. Falls diese Monomeren zur Modifizierung der Copolymerisate verwendet werden, werden sie vorzugsweise in Mengen von 5 bis 20 Mol-% verwendet.

Die Copolymerisation kann zusätzlich gegebenenfalls in Gegenwart von Monomeren der Gruppe (d) erfolgen. Diese Monomeren sind mit den übrigen Monomeren copolymerisierbar und enthalten mindestens zwei ethylenisch ungesättigte Doppelbindungen im Molekül. Verbindungen dieser Art werden üblicherweise bei Polymerisationen als Vernetzer bezeichnet. Geeignete Vernetzer sind beispielsweise Diacrylate oder Dimethacrylate von mindestens zweiwertigen gesättigten Alkoholen, z.B. Ethylenglykoldiacrylat, Ethylenglykoldimethylacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylat und 3-Methylpentandioldimethacrylat. Auch die Acrylsäure- und Methacrylsäureester von Alkoholen mit mehr als 2 OH-Gruppen können als Vernetzer eingesetzt werden, z.B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykolen mit Molekulargewichten von jeweils 200 bis 9000. Polyethylenglykole bzw. Polypropylenglykole, die für die Herstellung der Diacrylate oder Dimethacrylate verwendet werden, haben vorzugsweise ein Molekulargewicht von jeweils 400 bis 2000. Außer den Homopolymerisaten des Ethylenoxids bzw. Propylenoxids können auch Blockcopolymerisate aus Ethylenoxid und Propylenoxid oder Copolymerisate aus Ethylenoxid und Propylenoxid eingesetzt werden, die die Ethylenoxid- und Propylenoxid-Einheiten statistisch verteilt enthalten. Auch die Oligomeren des Ethylenoxids bzw. Propylenoxids sind für die Herstellung der Vernetzer geeignet, z.B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat.

Als Vernetzer eignen sich außerdem Vinylester von ethylenisch ungesättigten C₃- bis C₆-Carbonsäuren, z.B. Vinylacrylat, Vinylmethacrylat oder Vinylitaconat. Als Vernetzer geeignet sind außerdem Vinylester von mindestens 2 Carboxylgruppen enthaltenden gesättigten Carbonsäuren sowie Di- und Polyvinylether von mindestens zweiwertigen Alkoholen, z.B. Adipinsäuredivinylester, Butandioldivinylether und Trimethylolpropantrivinylether. Weitere Vernetzer sind Allylester ethylenisch ungesättigter Carbonsäuren, z.B. Allylacrylat und Allylmethacrylat, Allylether von mehrwertigen Alkoholen, z.B. Pentaerithrittriallylether, Triallylsaccharose und Pentaallylsaccharose. Außerdem eignen sich als Vernetzer Methylenbismethacrylamid, Divinylethylenharnstoff, Divinylpropylenharnstoff, Divinylbenzol, Divinyldioxan, Tetraallylsilan und Tetravinylsilan.

Die Monomeren der Gruppe (d) werden gegebenenfalls bei der Copolymerisation eingesetzt. Sie können in den Monomermischungen in Mengen bis zu 10 Mol-% enthalten sein. Falls man die Monomeren der Gruppe (d) mit den Monomeren der Gruppe (a) und gegebenenfalls den Gruppen (b) und/oder (c) copolymerisiert, betragen die vorzugsweise angewendeten Mengen 0,05 bis 8 Mol-%, bezogen auf die Monomermischungen.

Als Initiatoren kommen hierfür gebräuchlichen Verbindungen in Betracht, die unter den Polymerisationsbedingungen Radikale bilden, z. B. Peroxide, Hydroperoxide, Peroxidisulfate, Percarbonate, Peroxiester, Wassserstoffperoxid und Azoverbindungen. Beispiele für Initiatoren, die wasserlöslich oder auch wasserunlöslich sein können, sind Wasserstoffperoxid, Dibenzoylperoxid, Dicyclohexylperoxidicarbonat, Dilauroylperoxid, Methylethylketonperoxid, Acetylacetonperoxid, tert.-Butylhydroperoxid, Cumolhydroperoxid, tert.-Butylperneodecanoat, tert.-Amylperpivalat, tert.-Butylperpivalat, tert.-Butylperneohexanoat, tert.-Butylper-2-ethylhexanoat, tert.-Butyl-perbenzoat, Lithium-, Natrium-, Kalium- und Ammoniumperoxidisulfat, Azodiisobutyronitril, 2,2'-Azobis(2-amidinopropan)dihydrochlorid, 2,2'-Azobis (N, N'-dimethylenisobutyramidin)-dihydrochlorid, 2-(Carbamoylazo)iso-butyronitril und 4,4'-Azobis(4-cyanovaleriansäure).

Die obengenannten Initiatoren können allein oder in Mischung untereinander eingesetzt werden, z.B. Mischungen aus Wasserstoffperoxid und Natriumperoxidisulfat. Bevorzugt werden wasserlösliche Initiatoren eingesetzt. Auch die bekannten Redoxkatalysatoren, bei denen die reduzierende Komponente im molaren Unterschuß eingesetzt wird, sind geeignet. Beispielsweise kann man die obengenannten peroxidischen Initiatoren zusätzlich zu den im erfindungsgemäßen Verfahren zuzusetzenden reduzierenden Schwefel- oder Phosphorverbindungen zusammen mit einem weiteren Reduktionsmittel anwenden. Als weitere Reduktionsmittel eignen sich beispielsweise Ascorbinsäure, Ameisensäure und Aldehyde.

Die Redoxkatalysatoren können zusätzlich Salze von Übergangsmetallen enthalten, z.B. Salze von Eisen, Kobalt, Nickel, Kupfer, Vanadium und Mangan. Geeignete Salze sind z.B. Eisen-II-sulfat, Kobalt-II-chlorid, Nickel-II-sulfat, Kupfer-I-chlorid, Mangan-II-acetat, Vanadin-III-acetat und Mangan-II-chlorid.

Die bekannten Redoxkatalysatoren können die reduzierende Komponente in einem molaren Verhältnis von 0,05 bis 1 pro Mol der oxidierenden Komponente enthalten. Die Schwermetallionen werden üblicherweise in Mengen von 0,1 ppm bis 0,2 % eingesetzt.

Die Initiatoren werden im allgemeinen in Mengen von 0,05 bis 30, vorzugsweise 1 bis 15 Gew.-%, bezogen auf die zu polymerisierenden Monomeren verwendet.

Um das Molekulargewicht der Copolymerisate zu steuern, kann man die Copolymerisation gegebenenfalls in Gegenwart von Reglern durchführen. Als Regler eignen sich beispielsweise Aldehyde wie Formaldehyd, Acetaldehyd, Propionaldehyd, n-Butyraldehyd und Isobutyraldehyd, Ameisensäure, Ammoniumformiat, Hydroxylammoniumsalze wie Hydroxylammoniumsulfat und Hydroxylammoniumphosphat. Regler, die Schwefel in gebundener Form enthalten wie SH-Gruppen aufweisende Verbindungen, sind beispielsweise Thioglykolsäure, Mercaptopropionsäure, Mercaptoethanol, Mercaptopropanol, Mercaptobutanole und Mercaptohexanol. Beispiele für weitere Regler sind ein- und mehrwertige Alkohole mit bis zu 6 C-Atomen wie Isopropanol, n-Butanol, Butenole, Isobutanol, Glykol, Glycerin und Pentaerythrit sowie Salze des Hydrazins, z.B. Hydraziniumsulfat. Falls bei der Copolymerisation Regler eingesetzt werden, verwendet man davon 0,2 bis 25, vorzugsweise 0,5 bis 10 Gew.-%, bezogen auf die Monomeren. Die besonders wirksamen Regler, wie SH-Gruppen enthaltende Verbindungen, werden üblicherweise in Mengen bis höchstens 15 Gew.-% eingesetzt.

Die Copolymerisate werden erfindungsgemäß in Gegenwart einer reduzierend wirkenden Schwefel- oder Phosphorverbindung hergestellt. Reduzierend wirkende Schwefelverbindungen sind beispielsweise Sulfite, Bisulfite, Thiosulfate, Dithionite und Tetrathionate von Alkalimetallen und Ammoniumverbindungen, z.B. Natriumsulfit, Kaliumsulfit, Ammoniumsulfit, Natriumhydrogensulfit, Ammoniumhydrogensulfit, Kaliumbisulfit, Natriumthiosulfat, Kaliumthiosulfat, Ammoniumthiosulfat, Natriumdithionit, Kaliumdithionit und Natriumtetrathionat. Außerdem kann Schwefeldioxid als reduzierend wirkende Schwefelverbindung verwendet werden.

Als reduzierend wirkende Phosphorverbindungen sind alle Phosphorverbindungen geeignet, in denen Phosphor eine Oxidationszahl von 1 bis 4 hat, beispielsweise Natriumhypophosphit, phosphorige Säure und Phosphite wie Natriumphosphit, Kalium- und Ammoniumphosphit. Reduzierend wirkende Stickstoffverbindungen sind z.B. aliphatische oder aromatische Amine, Hydrazin oder Hydroxylamin. Die reduzierend wirkenden Stickstoffverbindungen können in Form der freien Basen oder in Salzform eingesetzt werden. Die Amine haben vorzugsweise einen Siedepunkt, der oberhalb von 80°C liegt. Geeignete Amine sind beispielsweise Triethylamin, Phenylethylamin, Dibutylamin, Oleylamin und Dimethylanilin. Besonders wirksam sind z.B. Hydrazinsulfat und Hydroxylammoniumchlorid. In einigen Fällen kann es vorteilhaft sein, Mischungen von reduzierend wirkenden Verbindungen einzusetzen, beispielsweise Mischungen aus mindestens einer reduzierend wirkenden Schwefelverbindung und mindestens einer reduzierend wirkenden Stickstoffverbindung oder Mischungen aus mindestens einer reduzierend wirkenden Phosphorverbindung und mindestens einer reduzierend wirkenden Stickstoffverbindung.

Bevorzugt verwendete Reduktionsmittel sind Natriumsulfit, Natriumbisulfit, Natriumdithionit, Schwefeldioxid, phosphorige Säure und Natriumphosphit. Anstelle der Natriumsalze kann man auch die Kali- oder Ammoniumsalze einsetzen. Es ist selbstverständlich möglich, auch Mischungen aus zwei verschiedenen Reduktionsmitteln bei der Copolymerisation anzuwenden. Die Menge an reduzierender Schwefel-, Stickstoff- und/oder Phosphorverbindung beträgt beispielsweise 0,06 bis 30, vorzugsweise 2 bis 25 Gew.-%, bezogen auf die eingesetzten Monomeren.

Als oberflächenaktive Mittel kommen sämtliche Verbindungen in Betracht, die die Oberflächenspannung von Wasser erniedrigen. Solche Verbindungen werden üblicherweise bei der Emulsionspolymerisation als Emulgator verwendet. Geeignete oberflächenaktive Mittel sind beispielsweise alkoxylierte Alkohole, alkoxylierte Phenole, alkoxylierte Amine, alkoxylierte Carbonsäuren, Alkylpolyglycoside, Alkylsulfate, Alkylsulfonate, Alkylbenzolsulfonate und/oder Blockcopolymerisate von Ethylenoxid und Propylenoxid.

Besonders geeignete alkoxylierte Alkohole werden z.B. durch Ethoxylierung von Alkoholen mit 8 bis 22 C-Atomen hergestellt, wobei man sowohl natürliche als auch synthetische Alkohole verwenden kann. Die Alkohole können geradkettig oder verzweigt sein und gegebenenfalls noch Hydroxylgruppen aufweisen oder auch eine oder mehrere monoethylenisch ungesättigte Doppelbindungen enthalten. Die Alkohole können mit 2 bis 50, vorzugsweise 3 bis 25 Mol Ethylenoxid pro Mol Alkohol umgesetzt sein. Man kann ebenso auch Blockcopolymerisate einsetzen, die durch stufenweise Alkoxylierung von Alkoholen mit beispielsweise Ethylenoxid und dann Propylenoxid und gegebenenfalls Butylenoxid erhältlich sind. Die Anordnung der Alkylenoxidblöcke kann dabei beliebig sein. Die Anlagerung von Alkylenoxiden an Alkohole kann auch mit einem Gemisch von Alkylenoxiden vorgenommen werden, so daß statistisch aufgebaute alkoxylierte Alkohole entstehen.

Nach dem gleichen Herstellungsprinzip erhält man die anderen alkoxylierten Verbindungen, indem man mindestens ein Alkylenoxid an Alkylphenole, Amine oder Carbonsäuren anlagert. Die Alkylphenole enthalten üblicherweise 1 bis 12 C-Atome in der Alkylgruppe. Die Amine können beispielsweise eine oder mehrere Aminogruppen im Molekül enthalten und 8 bis 22 C-Atome haben.

Die zur Alkoxylierung eingesetzten Carbonsäuren haben vorzugsweise 8 bis 22 C-Atome im Molekül.

Alkylsulfate und Alkylsulfonate sind - wie die anderen genannten oberflächenaktiven Mittel - handelsübliche Stoffe. Die Alkylgruppe enthält in den meisten Fällen 12 bis 16 C-Atome. Die Alkylgruppe in den Alkylbenzolsulfonaten leitet sich beispielsweise von geradkettigen oder verzweigten Alkylresten mit 8 bis 16 C-Atomen ab. Geeignete Blockcopolymerisate aus Ethylenoxid und Propylenoxid können beispielsweise Molekulargewichte (Zahlenmittel) von 300 bis 10.000 haben.
Die oberflächenaktiven Mittel können bei der Copolymerisation entweder allein oder auch in Mischung untereinander eingesetzt werden. Sie werden z.B. in Mengen von 0,05 bis 30, vorzugsweise 0,5 bis 15 Gew.-%, bezogen auf die Monomeren, verwendet. In den meisten Fällen arbeitet man mit Mengen von 0,75 bis 10 Gew.-%, bezogen auf die Monomeren.

Die Copolymerisation der Monomeren (a) und (b) und gegebenenfalls (c) und/oder (d) erfolgt in wäßrigem Medium. Sie kann mit Hilfe der gebräuchlichen Polymerisationstechniken kontinuierlich oder diskontinuierlich durchgeführt werden. Üblicherweise polymerisiert man in einer Inertgasatmosphäre, z.B. unter Stickstoff. Die Menge an Wasser wird beispielsweise so gewählt, daß man Polymerisatlösungen mit einer Konzentration von 10 bis 80, vorzugsweise 30 bis 70 Gew.-% erhält.

Der Neutralisationsgrad der Säuregruppen enthaltenden Monomeren beträgt beispielsweise 0 bis 30, vorzugsweise 0 bis 15 %. Die Copolymerisation wird vorzugsweise bei pH-Werten < 3 durchgeführt, weil dabei klare, homogene Copolymerisatlösungen entstehen. Polymerisiert man dagegen bei Neutralisationsgraden von > 30 %, so erhält man trübe Polymerisatlösungen, aus denen das Copolymerisat teilweise ausfallen kann.

Besonders bevorzugt werden nach dem erfindungsgemäßen Verfahren Monomermischungen aus
(a) 25 bis 75 Mol-% Vinylacetat und/oder Vinylpropionat und
(b) 75 bis 25 Mol-% Acrylsäure und/oder Methacrylsäure
oder aus
(a) 25 bis 75 Mol-% Vinylacetat und/oder Vinylpropionat,
(b1) 20 bis 60 Mol-% Acrylsäure und/oder Methacrylsäure und
(b2) 5 bis 55 Mol-% Maleinsäure
copolymerisiert. Die Copolymerisation wird vorzugsweise mit einem Alkalimetall- oder Ammoniumperoxodisulfat in Gegenwart einer reduzierend wirkenden Schwefelverbindung durchgeführt. Dabei beträgt das Molverhältnis von Peroxodisulfat zu reduzierend wirkender Schwefelverbindung vorzugsweise 1 : 1,1 bis 1 : 20. In den meisten Fällen beträgt es 1 : 1,5 bis 10. Die Copolymerisation kann bei Normaldruck, unter vermindertem oder unter erhöhtem Druck innerhalb eines weiten Temperaturbereichs vorgenommen werden. Die Temperaturen können dabei beispielsweise 10 bis 170°C betragen, wobei man bei Temperaturen oberhalb des Siedepunkts des Reaktionsgemisches unter erhöhtem Druck arbeitet. Üblicherweise betragen die Temperaturen für die Copolymerisation 30 bis 100, vorzugsweise 40 bis 80°C. Man erhält homogene wäßrige Lösungen oder Dispersionen von Copolymerisaten. Bei hoher Konzentration können die Copolymerisate aus den Lösungen ausfallen. Sie können jedoch durch Neutralisieren mit Alkalimetallbasen oder Ammoniak wieder gelöst oder zumindest stabil und homogen dispergiert werden. Die Copolymerisate haben beispielsweise K-Werte von 8 bis 120, meistens von 10 bis 70 (bestimmt nach H. Fikentscher in 1 gew.-%iger wäßriger Lösung am Na-Salz der Copolymerisate bei pH 7 und 25°C).

Die Vinylester einpolymerisiert enthaltenden Copolymerisate können gegebenenfalls durch Solvolyse und/oder Oxidation modifiziert werden. Um die Copolymerisate zu hydrolysieren, kann man beispielsweise die bei der Copolymerisation erhaltenen Lösungen durch Zugabe von Natronlauge oder Kalilauge auf pH-Werte oberhalb von 8 einstellen und gegebenenfalls durch Erhöhung der Temperatur der Lösung bis auf z.B. 100°C die Hydrolyse der einpolymerisierten Vinylestergruppen unter Bildung von Vinylalkoholeinheiten beschleunigen. Die Hydrolyse kann partiell, z.B. zu 5 bis 90 %, oder auch vollständig durchgeführt werden. Der K-Wert der hydrolysierten Copolymerisate liegt ebenfalls in dem Bereich von 10 bis 120.

Man kann die Copolymerisate gegebenenfalls auch oxidieren, wobei in den meisten Fällen ein Molekulargewichtsabbau beobachtet wird. Dementsprechend ändert sich auch der K-Wert der oxidierten Copolymerisate. Er liegt beispielsweise 2 bis 50 Einheiten unter dem K-Wert der bei der Copolymerisation erhältlichen Copolymerisate. Die Oxidation der Copolymerisate wird vorzugsweise in wäßriger Lösung vorgenommen. Als Oxidationsmittel kommen alle Aktivsauerstoff abgebenden Verbindungen in Betracht, beispielsweise alkalische Hypochloritlösungen, Ozon oder Wasserstoffperoxid. Die Oxidation kann z.B. bei Temperaturen von 10 bis 100°C erfolgen. Da die Oxidation vorzugsweise in alkalischem Medium vorgenommen wird, beobachtet man dabei auch eine mehr oder weniger stark ausgeprägte Hydrolyse der Copolymerisate. Aufgrund der oxidativen Behandlung werden die dispergierenden Eigenschaften der Copolymerisate verbessert.

Die nach dem erfindungsgemäßen Verfahren erhältlichen Copolymerisate sowie die daraus durch Hydrolyse und/oder Oxidation erhältlichen Copolymerisate werden als Zusatz zu Wasch- und Reinigungsmitteln verwendet. Sie haben in phosphatreduzierten (Phosphatgehalt < 25 Gew.-%) und phosphatfreien Formulierungen eine ausgeprägte inkrustationsinhibierende Wirkung und können darin in Mengen von 0,1 bis 30, vorzugsweise 1 bis 15 Gew.-%, bezogen auf die jeweiligen Formulierungen, enthalten sein.

Die Wasch- und Reinigungsmittel enthalten mindestens ein Tensid und gegebenenfalls sonstige übliche Bestandteile. Vorzugsweise werden solche Tenside verwendet, die biologisch abbaubar sind.

Die Waschmittel können pulverförmig sein oder auch in flüssiger Einstellung vorliegen. Die Zusammensetzung der Wasch- und Reinigungsmittelformulierungen kann sehr unterschiedlich sein. Wasch-und Reinigungsmittelformulierungen enthalten üblicherweise 2 bis 50 Gew.-% Tenside und gegebenenfalls Builder. Diese Angaben gelten sowohl für flüssige als auch für pulverförmige Waschmittel. Wasch- und Reinigungsmittelformulierungen, die in Europa, in den USA und in Japan gebräuchlich sind, findet man beispielsweise in Chemical und Engn. News, Band 67, 35 (1989) tabellarisch dargestellt. Weitere Angaben über die Zusammensetzung von Wasch- und Reinigungsmitteln können der WO-A-90/13581 sowie Ullmanns Encyklopädie der technischen Chemie, Verlag Chemie, Weinheim 1983, 4. Auflage, Seiten 63-160, entnommen werden. Die Waschmittel können gegebenenfalls noch ein Bleichmittel enthalten, z.B. Natriumperborat, das im Fall seines Einsatzes in Mengen bis zu 30 Gew.-% in der Waschmittelformulierung enthalten sein kann. Die Wasch- und Reinigungsmittel können gegebenenfalls weitere übliche Zusätze enthalten, z.B. Komplexbildner, Trübungsmittel, optische Aufheller, Enzyme, Parfümöle, Farbübertragungsinhibitoren, Vergrauungsinhibitoren, schmutzablösungsfördernde Polymere (soil release polymere) und/oder Bleichaktivatoren.

Die K-Werte der Copolymerisate wurden nach H. Fikentscher, Cellulose-Chemie, Band 13, 58 - 64 und 71 - 74 (1932) in wäßriger Lösung an den Natriumsalzen der Copolymerisate bei einer Konzentration von 1 Gew.-%, einem pH-Wert von 7 und einer Temperatur von 25°C bestimmt.

Die Prozentangaben in den Beispielen sind Gewichtsprozent.

### Beispiel 1

In einem 2 l fassenden Reaktor aus Glas, der mit einem Ankerrührer und 4 Zulaufgefäßen versehen ist, wurden 49,1 g Maleinsäureanhydrid zusammen mit 21,5 g einer 20 %igen wäßrigen Lösung eines Anlagerungsproduktes von 25 Mol Ethylenoxid an 1 Mol Isooctylphenol und 12,3 g einer 35 %igen wäßrigen Lösung eines Sulfats eines Anlagerungsproduktes von 25 Mol Ethylenoxid an 1 Mol Isooctylphenol in 190 ml Wasser vorgelegt und unter Inertgas auf 65°C Innentemperatur aufgeheizt. Zu dieser Lösung dosierte man innerhalb von 5 h eine Mischung aus 215 g Vinylacetat und 144,2 g Acrylsäure. Gleichbeginnend dosierte man innerhalb von 6 h eine Lösung von 20,4 g Natriumperoxodisulfat in 184 ml Wasser und 10,2 g Natriumbisulfit in 263 g Wasser zu. Die Innentemperatur der Reaktionsmischung wurde dabei auf 65°C gehalten. Nach Ende der Zuläufe wurde die Reaktionsmischung weitere 2 h auf 65°C erhitzt. Die Lösung wurde auf Raumtemperatur abgekühlt und unter Kühlung mit Natronlauge auf pH 7 gestellt. Das Polymer zeigte einen K-Wert von 65,9. Die Lösung enthielt 2,9 % Natriumacetat.

### Beispiel 2

500 g der Lösung des Copolymeren aus Beispiel 1 wurde mit 84,5 g 50 %iger wäßriger Natronlauge 2 h zum Rückfluß erhitzt. Mit Schwefelsäure wurde auf pH 7 zurückgestellt und mit 700 ml Wasser verdünnt. Das Produkt zeigte einen K-Wert von 45,7.

### Beispiel 3

Das Beispiel 1 wurde mit 30,6 g Na-Bisulfit wiederholt. Man erhielt ein Copolymer mit einem K-Wert von 38,2. Die wäßrige Lösung enthielt 3,5 % Natriumacetat.

### Beispiel 4

500 g der Lösung des Polymeren aus Beispiel 3 wurde mit 85,3 g 50 %iger wäßriger Natronlauge 2 h unter Rückfluß erhitzt. Danach wurde der pH-Wert durch Zugabe von Schwefelsäure auf 7 eingestellt und das Reaktionsgemisch mit 700 ml Wasser verdünnt. Das hydrolysierte Copolymerisat zeigte einen K-Wert von 28,2.

### Beispiel 5

Beispiel 1 wurde mit der Ausnahme wiederholt, daß man 10,2 g Na-Peroxodisulfat als Initiator einsetzte. Man erhielt ein Copolymer mit einem K-Wert von 68,6. Die wäßrige Copolymerisatlösung enthielt 3,5 % Natriumacetat.

### Beispiel 6

Beispiel 1 wurde mit der Ausnahme wiederholt, daß man 81,6 g Na-Bisulfit einsetzte. Man erhielt ein Copolymer mit einem K-Wert von 16,1. Die wäßrige Copolymerisatlösung enthielt 2,5 % Natriumacetat.

### Beispiel 7

500 g der Lösung des Copolymeren aus Beispiel 6 wurden mit 77,5 g 50 %iger wäßriger NaOH 2 h zum Rückfluß erhitzt. Danach wurde das Reaktionsgemisch durch Zugabe von Schwefelsäure auf einen pH-Wert von 7 eingestellt und mit 700 ml Wasser verdünnt. Das Produkt zeigte einen K-Wert von 14,8.

### Beispiel 8

In einem gerührten 2-l-Glasreaktor mit Ankerrührer und 4 Zulaufgefäßen wurden 98,7 g Maleinsäureanhydrid zusammen mit 21,5 g einer 20 %igen Lösung eines Anlagerungsproduktes von 25 Mol Ethylenoxid an 1 Mol Isooctylphenol und 12,3 g einer 35 %igen Lösung eines Sulfats eines Anlagerungsproduktes von 25 Mol Ethylenoxid an 1 Mol Isooctylphenol in 190 ml Wasser vorgelegt und unter Inertgas auf 65°C Innentemperatur aufgeheizt und mit 20 g NaOH (50 %ig) teilneutralisiert. Zu dieser Lösung dosierte man innerhalb von 5 h eine Mischung aus 125,2 g Vinylacetat und 175,3 g Acrylsäure. Gleichbeginnend dosierte man innerhalb von 6 h eine Lösung von 20,4 g Natriumperoxodisulfat in 184 ml Wasser und 30,6 g Natriumbisulfit in 263 g Wasser zu. Die Innentemperatur der Reaktionsmischung wurde dabei auf 65°C gehalten. Nach Ende der Zuläufe wurde die Reaktionsmischung weitere 2 h auf 65°C erhitzt. Die Lösung wurde auf Raumtemperatur abgekühlt und unter Kühlung mit Natronlauge auf pH 7 gestellt.

Das Polymer zeigte einen K-Wert von 50. Die wäßrige Lösung enthielt 2,7 % Natriumacetat.

### Beispiel 9

In einem gerührten 2-1-Glasreaktor mit Ankerrührer und 4 Zulaufgefäßen wurden 16,0 g einer 20 %igen Lösung eines Anlagerungsproduktes von 25 Mol Ethylenoxid an 1 Mol Isooctylphenol und 12,3 g einer 35 %igen Lösung eines Sulfats eines Anlagerungsproduktes von 25 Mol Ethylenoxid an 1 Mol Isooctylphenol in 350 ml Wasser vorgelegt und unter Inertgas auf 65°C Innentemperatur aufgeheizt. Zu dieser Lösung dosierte man innerhalb von 5 h eine Mischung aus 160 g Vinylacetat und 240 g Acrylsäure. Gleichbeginnend dosierte man innerhalb von 6 h eine Lösung von 40 g Natriumperoxodisulfat in 160 ml Wasser und 80 g Natriumbisulfit in 260 g Wasser zu. Die Innentemperatur der Reaktionsmischung wurde dabei auf 65°C gehalten. Nach Ende der Zuläufe wurde die Reaktionsmischung weitere 2 h auf 65°C erhitzt. In die Lösung wurde anschließend 5 h bei 100°C Wasserdampf eingeleitet und Wasser/Essigsäure-Gemisch abdestilliert. Man erhielt nach Neutralisation mit NaOH eine gelbliche Lösung des Polymeren. Das Copolymerisat hatte einen K-Wert von 11,7. Die wäßrige Copolymerisatlösung enthielt 2,1 % Natriumacetat.

### Beispiel 10

In einem gerührten 2-1-Glasreaktor mit Ankerrührer und 4 Zulaufgefäßen wurden 32 g einer 20 %igen Lösung eines Anlagerungsproduktes von 25 Mol Ethylenoxid an 1 Mol Isooctylphenol und 18,3 g einer 35 %igen Lösung eines Sulfats eines Anlagerungsproduktes von 25 Mol Ethylenoxid an 1 Mol Isooctylphenol in 342 ml Wasser vorgelegt und unter Inertgas auf 65°C Innentemperatur aufgeheizt. Zu dieser Lösung dosierte man innerhalb von 5 h eine Mischung aus 160 g Vinylacetat und 240 g Acrylsäure. Gleichbeginnend dosierte man innerhalb von 6 h eine Lösung von 40 g Natriumperoxodisulfat in 160 ml Wasser und 80 g Natriumbisulfit in 260 g Wasser zu. Die Innentemperatur der Reaktionsmischung wurde dabei auf 65°C gehalten. Nach Ende der Zuläufe wurde die Reaktionsmischung weitere 2 h auf 65°C erhitzt. In die Lösung wurde anschließend 2 h bei 100°C Wasserdampf eingeleitet und Wasser/Essigsäure-Gemisch abdestilliert. Man erhielt nach Neutralisation mit NaOH eine gelbliche Lösung des Copolymeren. Das Copolymerisat hatte einen K-Wert von 11,7. Die wäßrige Copolymerisatlösung enthielt 1,4 % Natriumacetat.

### Vergleichsbeispiel 1

Das Beispiel 1 wurde ohne Zusatz des oberflächenaktiven Mittels wiederholt. Die Lösung enthielt 12,3 % Natriumacetat.

### Anwendungstechnische Beispiele

Die inkrustationsinhibierenden Eigenschaften der Copolymeren wurden im Waschtest ermittelt. Hierzu wurde jeweils Testgewebe aus Baumwolle gewaschen. Die Zahl der Waschzyclen betrug 15. Nach dieser Anzahl von Wäschen wurde der Aschegehalt des Gewebes ermittelt, indem man das Testgewebe jeweils veraschte. Je niedriger der Aschegehalt nach der wiederholten Wäsche, desto wirksamer ist das Copolymer als Inkrustationsinhibitor. Die in zwei Versuchsserien erhaltenen Aschewerte sind in den Tabellen 3 und 4 angegeben. Die Copolymeren zeigen deutliche Wirksamkeit, erkennbar an dem Vergleich mit dem Versuch ohne Polymer. Als weiterer Vergleich wurde in jeder Serie ein Versuch mit einem handelsüblichen Inkrustationsinhibitor als Standardpolymer nach dem Stand der Technik vorgenommen. Die meisten der erfindungsgemäßen Copolymere zeigen im Vergleich zum Standardpolymer deutliche Verbesserungen.

**Tabelle 1:**

| Waschbedingungen | |
|---|---|
| Waschgerät | Launderometer |
| Waschmittelflotte | 250 g |
| Waschmitteldosierung | 4,5 g/l |
| Waschzeit | 30 min |
| Waschtemperatur | 60°C |
| Flottenverhältnis | 1 : 12,5 |
| Anzahl der Waschzyclen | 15 |
| Prüfgewebe | 20 g Baumwollgewebe |
| Wasserhärte | 4,0 mmol |
| Ca:Mg-Verhältnis (molar) | 4:1 |

**Tabelle 2:**

| Waschmittelzusammensetzung | |
|---|---|
| | Gew.-% |
| Alkylbenzolsulfonat | 8,00 |
| C₁₃/C₁₅-Oxoalkohol ethoxyliert mit 7 Ethylenoxid | 7,00 |
| Fettsäure-Na-Salz | 2,00 |
| Carboxymethylcellulose | 1,00 |
| Zeolith A | 36,00 |
| Natriumcarbonat | 12,00 |
| Na-Perborat * tetrahydrat | 22,00 |
| TAED ¹) | 2,00 |
| optischer Aufheller | 0,20 |
| Enzyme | 0,50 |
| Copolymer (100 %) | 5,00 |
| Na-Sulfat | Rest auf 100 |

| | |
|---|---|
| ¹) TAED = Tetraacetylethylendiamin | |

Die Ergebnisse der Waschversuche sind in den Tabellen 3 und 4 wiedergegeben:

**Tabelle 3:**

| Waschserie 1 | | | |
|---|---|---|---|
| Beispiel Nr. | Vergleichsbeispiel Nr. | Copolymer erhalten nach Beispiel | Asche [%] |
| -- | 2 | ohne | 3,62 |
| -- | 3 | AS/MS^{a}) | 2,67 |
| 11 | - | 1 | 2,56 |
| 12 | - | 2 | 3,09 |
| 13 | - | 3 | 2,16 |
| 14 | - | 4 | 2,38 |

| | | | |
|---|---|---|---|
| ^{a}) Copolymer aus Acrylsäure und Maleinsäure im Gewichtsverhältnis 70 : 30 mit einem K-Wert (gemessen am Na-Salz in 1 %iger wäßriger Lösung) von 60 | | | |

**Tabelle 4:**

| Waschserie 2 | | | |
|---|---|---|---|
| Beispiel Nr. | Vergleichsbeispiel Nr. | Copolymer erhalten nach Beispiel | Asche [%] |
| -- | 4 | ohne | 3,23 |
| -- | 5 | AS/MS^{a}) | 2,31 |
| 15 | - | 5 | 1,99 |
| 16 | - | 6 | 2,19 |
| 17 | - | 7 | 1,82 |
| 18 | - | 8 | 2,03 |

| | | | |
|---|---|---|---|
| ^{a}) vgl. Legende zu Tabelle 3 | | | |

### Prüfung der biologischen Abbaubarkeit der Copolymerisate

Die Copolymeren zeigen eine deutlich bessere biologische Abbaubarkeit als Polycarboxylate auf Basis Acrylsäure oder Acrylsäure/ Maleinsäure nach dem Stand der Technik.

Zur Prüfung der biologischen Abbaubarkeit wurde das jeweils in Tabelle 5 angegebene Copolymerisat als einzige C-Quelle (20 mg DOC/l, DOC = dissolved organic carbon) mit Belebtschlamm (150 mg Trockensubstanz / l) einer Kläranlage inkubiert und die CO₂-Entwicklung bestimmt (CO₂-Standtest - Modifizierung des Sturm-Testes nach OECD 301 B). Die in Tabelle 5 enthaltenen Prozentangaben zum biologischen Abbau beziehen sich auf das Verhältnis von Kohlenstoff in gebildetem CO₂ zum Gesamt-Kohlenstoff in der zugesetzten Prüfsubstanz (TOC = total organic carbon).

**Tabelle 5**

| Copolymer nach Beispiel | % Abbau nach 42 Tagen |
|---|---|
| 1 | 41 % |
| 2 | 49 % |
| 6 | 48 % |
| 7 | 59 % |
| | |
| AS/MS ^{a}) (Vergleich) | 7 % |

| | |
|---|---|
| ^{a}) vgl. Legende zu Tabelle 3 | |

## Patentansprüche

1. Verfahren zur Herstellung von Copolymerisaten aus Vinylestern und monoethylenisch ungesättigten Carbonsäuren durch radikalische Copolymerisation in wäßrigem Medium in Gegenwart von Initiatoren und gegebenenfalls Reglern, dadurch gekennzeichnet, daß man
(a) 20 bis 80 Mol-% Vinylester von aliphatischen Monocarbonsäuren mit mindestens 2 C-Atomen,
(b) 80 bis 20 Mol-% monoethylenisch ungesättigte Carbonsäuren und gegebenenfalls
(c) 0 bis 30 Mol-% anderen copolymerisierbare monoethylenisch ungesättigte Monomere und/oder
(d) 0 bis 10 Mol-% Monomere, die mindestens zwei ethylenisch ungesättigte, nicht konjugierte Doppelbindungen im Molekül enthalten,
in Gegenwart mindestens einer reduzierend wirkenden Schwefel-, Phosphor- und/oder Stickstoffverbindung und von 0,05 bis 30 Gew.-%, bezogen auf die Monomeren, mindestens eines oberflächenaktiven Mittels copolymerisiert.

2. Verfahren nach Anspruch 1, dadurch gekennzeichnet, daß der Neutralisationsgrad der Säuregruppen enthaltenden Monomeren 0 bis höchstens 30 % beträgt.

3. Verfahren nach Anspruch 1 oder 2, dadurch gekennzeichnet, daß man Monomermischungen aus
(a) 25 bis 75 Mol-% Vinylacetat und/oder Vinylpropionat
(b) 75 bis 25 Mol-% Acrylsäure und/oder Methacrylsäure
copolymerisiert.

4. Verfahren nach Anspruch 1 oder 2, dadurch gekennzeichnet, daß man Monomermischungen aus
(a) 25 bis 75 Mol-% Vinylacetat und/oder Vinylpropionat,
(b1) 20 bis 60 Mol-% Acrylsäure und/oder Methacrylsäure
und
(b2) 10 bis 55 Mol-% Maleinsäure
copolymerisiert.

5. Verfahren nach einem der Ansprüche 1 bis 4, dadurch gekennzeichnet, daß man die radikalische Copolymerisation mit einem Alkalimetall- oder Ammoniumperoxodisulfat in Gegenwart einer reduzierend wirkenden Schwefelverbindung durchführt.

6. Verfahren nach Anspruch 5, dadurch gekennzeichnet, daß das Molverhältnis von Peroxodisulfat zu reduzierend wirkender Schwefelverbindung 1 : 1,1 bis 1 : 20 beträgt.

7. Verfahren nach Anspruch 5, dadurch gekennzeichnet, daß das Molverhältnis von Peroxodisulfat zu reduzierend wirkender Schwefelverbindung 1 : 1,5 bis 10 beträgt.

8. Verfahren nach einem der Ansprüche 1 bis 7, dadurch gekennzeichnet, daß man als oberflächenaktive Mittel alkoxylierte Alkohole, alkoxylierte Phenole, alkoxylierte Amine oder alkoxylierte Carbonsäuren, Alkylsulfate, Alkylsulfonate, Alkylbenzolsulfonate und/oder Blockcopolymerisate von Ethylenoxid und Propylenoxid einsetzt.

9. Verfahren nach Anspruch 8, dadurch gekennzeichnet, daß man die oberflächenaktiven Mittel in Mengen von 0,5 bis 15 Gew.-%, bezogen auf die Monomeren, einsetzt.

## Claims

1. A process for preparing copolymers of vinyl esters and monoethylenically unsaturated carboxylic acids by free-radical copolymerization in aqueous medium in the presence of initiators and in the presence or absence of regulators, which comprises copolymerizing
(a) 20 to 80 mol% of vinyl esters of aliphatic monocarboxylic acids having at least 2 carbon atoms and
(6) 80-20 mol% of monoethylenically unsaturated carboxylic acids, with or without
(c) 0-30 mol% of other copolymerizable monoethylenically unsaturated monomers and/or
(d) 0-10 mol% of monomers which contain at least two nonconjugated ethylenic double bonds in the molecule,
in the presence of at least one sulfur, phosphorus and/or nitrogen compound with a reducing action and of 0.05-30% by weight, based on the monomers, of at least one surface-active agent.

2. A process as claimed in claim 1, wherein the degree of neutralization of the monomers containing acidic groups does not exceed 30%.

3. A process as claimed in claim 1 or 2, wherein mixtures of
(a) 25-75 mol% of vinyl acetate and/or vinyl propionate and
(b) 75-25 mol% of acrylic acid and/or methacrylic acid monomers are copolymerized.

4. A process as claimed in claim 1 or 2, wherein mixtures of
(a) 25-75 mol% of vinyl acetate and/or vinyl propionate,
(b1) 20-60 mol% of acrylic acid and/or methacrylic acid and
(b2) 10-55 mol% of maleic acid
monomers are copolymerized.

5. A process as claimed in any of claims 1 to 4, wherein the free-radical copolymerization is carried with an alkali metal or ammonium peroxodisulfate in the presence of a sulfur compound with a reducing action.

6. A process as claimed in claim 5, wherein the molar ratio of peroxodisulfate to sulfur compound with a reducing action is from 1:1.1 to 1:20.

7. A process as claimed in claim 5, wherein the molar ratio of peroxodisulfate to sulfur compound with a reducing action is from 1:1.5 to 10.

8. A process as claimed in any of claims 1 to 7, wherein alkoxylated alcohols, alkoxylated phenols, alkoxylated amines or alkoxylated carboxylic acids, alkyl sulfates, alkylsulfonates, alkylbenzenesulfonates and/or block copolymers of ethylene oxide and propylene oxide are used as surface-active agents.

9. A process as claimed in claim 8, wherein the surface-active agents are used in amounts of from 0.5 to 15% by weight of the weight of the monomers.

## Revendications

1. Procédé de préparation de copolymères formés à partir d'esters vinyliques et d'acides carboxyliques à insaturation monoéthylénique par polymérisation radicalaire en milieu aqueux en présence d'amorceurs et éventuellement de régulateurs, caractérisé en ce que l'on copolymérise
a) 20 - 80 % en moles d'ester vinylique d'acides monocarboxyliques aliphatiques ayant au moins deux atomes de carbone,
b) 80 - 20 % en moles d'acides carboxyliques à insaturation monoéthylénique et éventuellement
c) 0 - 30 % en moles d'autres monomères copolymérisables à insaturation monoéthylénique et/ou
d) 0 - 10 % en moles de monomères, qui contiennent dans leur molécule au moins deux doubles liaisons non-conjuguées à insaturation éthylénique,
en présence d'au moins un composé du soufre, du phosphore et/ou de l'azote à action réductrice et de 0,05 à 30 % en poids, par rapport aux monomères, d'au moins un agent tensio-actif.

2. Procédé selon la revendication 1, caractérisé en ce que le taux de neutralisation des monomères contenant des groupements acide s'élève à 0 à 30 % au maximum.

3. Procédé selon la revendication 1 ou 2, caractérisé en ce que l'on copolymérise des mélanges de monomères constitués de
a) 25 - 75 % en moles d'acétate de vinyle et/ou de propionate de vinyle,
b) 75 - 25 % en moles d'acide acrylique et/ou d'acide méthacrylique.

4. Procédé selon la revendication 1 ou 2, caractérisé en ce que l'on copolymérise des mélanges de monomères constitués de
a) 25 - 75 % en moles d'acétate de vinyle et/ou de propionate de vinyle,
b1) 20 - 60 % en moles d'acide acrylique et/ou d'acide méthacrylique,
et
b2) 10 - 55 % en moles d'acide maléique.

5. Procédé selon l'une quelconque des revendications 1 à 4, caractérisé en ce que l'on effectue la polymérisation radicalaire avec un peroxodisulfate d'ammonium ou de métal alcalin, en présence d'un composé du soufre à action réductrice.

6. Procédé selon la revendication 5, caractérisé en ce que le rapport en moles du peroxodisulfate au composé du soufre à action réductrice vaut 1 : 1,1 à 1 : 20.

7. Procédé selon la revendication 5, caractérisé en ce que le rapport en moles du peroxodisulfate au composé du soufre à action réductrice vaut 1 : 1,5 à 10.

8. Procédé selon l'une quelconque des revendications 1 à 7, caractérisé en ce que l'on utilise en tant qu'agent tensio-actif des alcools alcoxylés, des phénols alcoxylés, des amines alcoxylées ou des acides carboxyliques alcoxylés, des sulfates d'alkyle, des sulfonates d'alkyle, des sulfonates d'alkylbenzène et/ou des copolymères séquencés d'oxyde d'éthylène et d'oxyde de propylène.

9. Procédé selon la revendication 8, caractérisé en ce que l'on utilise l'agent tensio-actif en quantités de 0,5 - 15 % en poids par rapport aux monomères.
